# EUROPEAN PATENT APPLICATION

(11) **EP 4 765 613 A1**
(43) Date of publication of application: **24.06.2026**
(21) Application number: 25214660.0
(22) Date of filing: 10.11.2025
(51) Int. Cl.: H02M 5/297, H02M 5/458, H02M 1/00, H02M 1/42, H02M 5/22, H02M 7/5387

(54) **SYSTEMS AND METHODS FOR SWITCHING PATTERN FOR POWER CONVERTER**

(30) Priority: 18.12.2024 US 202418985765
(71) Applicant: Borgwarner Inc., Auburn Hills, Michigan 48326 (US)
(72) Inventor: SREEDHAR, Sunil, Westfield, IN (US)
(74) Representative: Office Freylinger

(57) **Abstract**

A power converter includes a first half-bridge configured to operate at a first frequency, a second half-bridge in parallel with the first half-bridge and configured to operate at the first frequency, a third half-bridge in parallel with the second half-bridge and configured to operate at the first frequency, and a neutral half-bridge of the power converter in parallel with the third half-bridge and configured to operate at a second frequency, wherein the second frequency is based on the first frequency.

## Description

### TECHNICAL FIELD

Various embodiments of the present disclosure relate generally to power converters and, more particularly, to systems and method for controlling half-bridge switches in a power converter.

### BACKGROUND

Electric vehicles, for example, may include a power converter, such as a charger to charge a battery of the electric vehicle. Electric vehicles may include an inverter to convert power from the battery to power for a system, such as a power outlet, of the vehicle. The charger and the inverter may not be operated simultaneously. A switching pattern for a totem pole topology may switch a neutral half-bridge at two times an AC input line frequency and may switch the other leaves or legs at a higher frequency. This switching pattern may limit an operation of the power converter or an efficiency of the power converter.

The present disclosure is directed to overcoming one or more of these above-referenced challenges.

### SUMMARY OF THE DISCLOSURE

In some aspects, the techniques described herein relate to a power converter including: a first half-bridge configured to operate at a first frequency; a second half-bridge in parallel with the first half-bridge and configured to operate at the first frequency; a third half-bridge in parallel with the second half-bridge and configured to operate at the first frequency; and a neutral half-bridge of the power converter in parallel with the third half-bridge and configured to operate at a second frequency, wherein the second frequency is based on the first frequency.

In some aspects, the techniques described herein relate to a power converter, wherein each of the first half-bridge, the second half-bridge, the third half-bridge, and the neutral half-bridge includes a first switch and a second switch.

In some aspects, the techniques described herein relate to a power converter, wherein the second frequency is 50% of the first frequency.

In some aspects, the techniques described herein relate to a power converter, wherein the power converter is an AC-AC converter.

In some aspects, the techniques described herein relate to a power converter, wherein a duty cycle of the neutral half-bridge is 50%, and the duty cycle of the neutral half-bridge is independent from a duty cycle of the first half-bridge, the second half-bridge, and the third half-bridge.

In some aspects, the techniques described herein relate to a power converter, further including: one or more controllers configured to operate the first half-bridge, the second half-bridge, the third half-bridge, and the neutral half-bridge.

In some aspects, the techniques described herein relate to a power converter, wherein one or more controllers are configured to generate the second frequency and the first frequency using a same clock signal.

In some aspects, the techniques described herein relate to a power converter, wherein the power converter is configured to generate 50 Hz AC output power based on a 60 Hz AC input power.

In some aspects, the techniques described herein relate to a power converter, wherein the second frequency is independent from a frequency of AC input power to the power converter.

In some aspects, the techniques described herein relate to a power converter, further including: an inverter including the power converter, the inverter configured to convert DC power from a battery to AC power to drive a motor, the battery configured to supply the DC power to the inverter; and the motor configured to receive the AC power from the inverter to drive the motor, wherein the inverter, the battery, and the motor are provided as a vehicle.

In some aspects, the techniques described herein relate to a system including one or more controllers configured to operate a first half-bridge of a power converter at a first frequency, a second half-bridge of the power converter at the first frequency, a third half-bridge of the power converter at the first frequency, and a neutral half-bridge of the power converter at a second frequency, wherein the second frequency is based on the first frequency.

In some aspects, the techniques described herein relate to a system, wherein the first half-bridge is in parallel with the second half-bridge, the second half-bridge is in parallel with the third half-bridge, and the third half-bridge is in parallel with the neutral half-bridge.

In some aspects, the techniques described herein relate to a system, wherein the second frequency is 50% of the first frequency.

In some aspects, the techniques described herein relate to a system, wherein the one or more controllers are configured to generate the second frequency independently from a frequency of AC input power to the power converter.

In some aspects, the techniques described herein relate to a method including: operating switches of a first half-bridge of a power converter at a first frequency; operating switches of a second half-bridge of the power converter at the first frequency; operating switches of a third half-bridge of the power converter at the first frequency; and operating switches of a neutral half-bridge of the power converter at a second frequency, wherein the second frequency is based on the first frequency.

In some aspects, the techniques described herein relate to a method, wherein the second frequency is 50% of the first frequency.

In some aspects, the techniques described herein relate to a method, wherein a duty cycle of the neutral half-bridge is independent from a duty cycle of the first half-bridge, the second half-bridge, and the third half-bridge.

In some aspects, the techniques described herein relate to a method, further including: generating the second frequency and the first frequency based on a common clock signal.

In some aspects, the techniques described herein relate to a method, further including: operating one or more of the first half-bridge, the second half-bridge, the third half-bridge, or the neutral half-bridge during a zero crossing of an AC input signal to the power converter.

In some aspects, the techniques described herein relate to a method, wherein the operating the switches of the neutral half-bridge of the power converter at the second frequency includes converting a single phase AC input signal to the power converter to a split phase AC output signal or a three-phase AC output signal.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for a vehicle including a power converter, according to one or more embodiments.
FIG. 2 depicts an exemplary system infrastructure for a battery charger, according to one or more embodiments.
FIG. 3 depicts an implementation of a computer system that may execute techniques presented herein, according to one or more embodiments.
FIG. 4 depicts a power converter with a totem pole topology, according to one or more embodiments.
FIG. 5 depicts a switching pattern at approximately 50% duty cycle, according to one or more embodiments.
FIG. 6 depicts a switching pattern at approximately 17% duty cycle, according to one or more embodiments.
FIG. 7 depicts a switching pattern at approximately 75% duty cycle, according to one or more embodiments.
FIG. 8 depicts input voltage and input current for a converter operation, according to one or more embodiments.

### DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of ±10% in the stated value. In this disclosure, unless stated otherwise, any numeric value may include a possible variation of ±10% in the stated value.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section.

Various embodiments of the present disclosure relate generally to power converters and, more particularly, to systems and method for controlling half-bridge switches in a power converter. A switching pattern for totem pole topology may switch a neutral half-bridge at two times an AC input line frequency and may switch the other leaves/legs, which may include half-bridges including one or more switches, at higher frequency that may be determined by hardware when used as a PFC (power factor control) in a system, such as an on-board charger application for an electric vehicle.

One or more embodiments may provide a switching pattern that switches a neutral half-bridge at one half the switching frequency of the fast switching leaves or legs, which may include half-bridges including one or more switches. One or more embodiments may provide a duty cycle of a neutral half-bridge that is set to approximately 50%.

The duty cycle of the fast switching leaves or legs may be determined by the control loops. A leaf or leg may include a half-bridge, such as two switches in series. A leaf or leg may include a totem-pole circuit element topology, including a first switch connected in series with a second switch, and a connection point between the two being the output. A leaf or leg may include one or more switches configured to be controlled by one or more controllers. One or more embodiments may include a switching pattern which may be used in both a positive and a negative half cycle of the AC input voltage for each switch of a totem pole hardware. One or more embodiments may not need to be modified in every half cycle.

One or more embodiments may include generating, independently from determining the AC half cycle, a switching pattern for a neutral half-bridge. Determining the AC (alternating current) voltage half cycle may utilize software and hardware to detect a zero crossing. Determining the AC half cycle may include adjusting a switching pattern based on detecting a zero crossing. Determining the AC half cycle may include a neutral switching pattern which may require half cycle knowledge to determine when to turn ON the upper and lower switches. Determining the AC half cycle may include a duty cycle determined by the control loop to be applied to upper and lower switches differently based on the AC half cycle.

One or more embodiments may include a switching pattern that does not require or utilize zero crossing detection and processing. One or more embodiments may include efficiency improvement, including continuous conduction, for example, during a zero crossing. One or more embodiments may provide a converter switching continuing even at zero crossing, which may provide higher efficiency, due to independence from the AC half cycle. One or more embodiments may provide the ability to perform simultaneous operation in bi-directional OBCs (for example, bi-directional on-board chargers). One or more embodiments may provide a switching pattern which provides OBC HV (high voltage) battery charging and AC output voltage generation at the same time or near-same time. One or more embodiments may provide a switching pattern providing generation of split phase and three phase AC output voltage while an OBC is charging an HV battery using a single phase input. One or more embodiments may provide a switching pattern which provides independence from an AC line frequency. For example, one or more embodiments may provide a converter with an approximately 60Hz AC input and an approximately 50Hz AC output.

One or more embodiments may provide an ability to perform AC to AC conversion, and may provide a switching pattern which may allow AC input to AC output conversion without the need for a transformer. One or more embodiments may provide a switching pattern which provides conversion of one AC phase type to another. For example, one or more embodiments may provide conversion of single phase AC input to split phase or three phase AC output. One or more embodiments may provide a switching pattern which provides generation of different AC output frequencies independent of the AC input frequency. One or more embodiments may provide a switching pattern at approximately 50% duty of leaf one, a switching pattern at approximately 17% duty cycle, a switching pattern at approximately 75% duty cycle, and a converter operation including input voltage and input current.

A switching pattern for a totem pole in a PFC application may include having high frequency switching half-bridges and a neutral half-bridge that switches at an AC frequency rate. For example, a switching pattern may include a first leg, second leg and third leg as fast switching half-bridges, and a neutral leg as a slow switching half-bridge (AC frequency).

One or more embodiments may provide a switching pattern for a totem pole converter where the switching frequency of the neutral half-bridge is faster than some applications, and may allow different operating modes of the totem pole, which may be beneficial for multi-functional on-board chargers or AC to AC converters. For example, one or more embodiments may provide a first leg (for example, HB1), a second leg (for example, HB2), and a third leg (for example, HB3) as fast switching (for example, 100 kHz), and a neutral leg as fast switching (for example, 50 kHz).

One or more embodiments may provide one or more controllers which may operate independent of an AC half cycle, which may provide better reaction when compared to deadband around zero crossing. One or more embodiments may provide neutral switching which can be performed as one-time configuration instead of software control. One or more embodiments may include a totem pole operation as a PFC converter in an OBC system. One or more embodiments may provide independence from determining the AC half cycle. An AC half cycle determination may utilize software and hardware to detect a zero crossing and adjust a switching pattern based on an AC half cycle determination.

Additionally, in AC half cycle determination, a neutral switching pattern may require half cycle knowledge in order to determine when to turn ON upper and lower switches. Similarly, in AC half cycle determination, a duty cycle determined by a control loop may be applied to upper and lower switches differently based on an AC half cycle. One or more embodiments may provide a switching pattern that does not require zero crossing detection and processing, including an ability to perform simultaneous operation in bi-directional OBCs. One or more embodiments may provide a switching pattern to allow OBC HV battery charging and AC output voltage generation at the same time.

One or more embodiments may provide a switching pattern to allow generation of split phase and three phase AC output voltage while the OBC is charging the HV battery using a single phase input. One or more embodiments may provide a switching pattern which may provide independence from the AC line frequency. For example, a converter may use a 60Hz AC input and generate a 50Hz AC output. One or more embodiments may provide an ability to perform AC to AC conversion. One or more embodiments may provide a switching pattern which may allow AC input to AC output conversion without the need for transformer.

One or more embodiments may provide a switching pattern which may allow conversion of one AC phase type to another. For example, one or more embodiments may convert single phase AC input to split phase or three phase AC output. One or more embodiments may provide a switching pattern which may allow the ability to generate different AC output frequencies independent of the AC input frequency. One or more embodiments may provide efficiency improvement, including a converter that may not have to change the switching pattern based on AC half cycle, and where the converter switching may continue even at zero crossing and may avoid diode conduction which leads to higher efficiency.

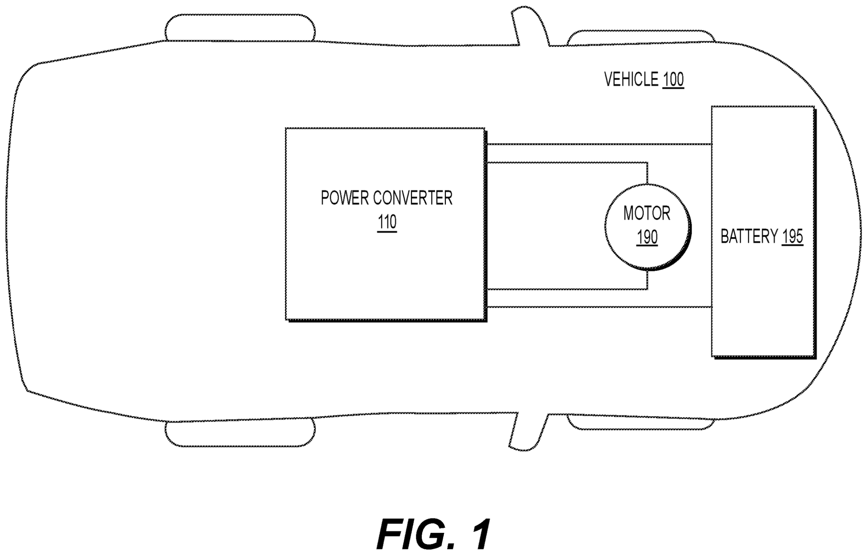

FIG. 1 depicts an exemplary system infrastructure for a vehicle including a power converter, according to one or more embodiments. In the context of this disclosure, the on-board charger may include a combined inverter and converter, and the combined inverter and converter may be referred to as an inverter. The onboard charger is merely an example embodiment, and the disclosure is not limited thereto. For example, the disclosure may include any power converter with a totem pole topology. For example, one or more embodiments may provide an AC-AC power converter. As shown in FIG. 1, electric vehicle 100 may include a battery charger 110, a motor 190, and a battery pack or load battery 195. The battery charger 110 may include components to receive electrical power from an external source and output electrical power to charge battery pack or load battery 195 of electric vehicle 100. The battery charger 110 may convert DC power from battery pack or load battery 195 in electric vehicle 100 to AC power, to drive motor 190 of the electric vehicle 100, for example, but the embodiments are not limited thereto. The battery charger 110 may be bidirectional, and may convert DC power to AC power, or convert AC power to DC power, such as during regenerative braking, for example. Battery charger 110 may be a single-phase inverter or a multi-phase inverter.

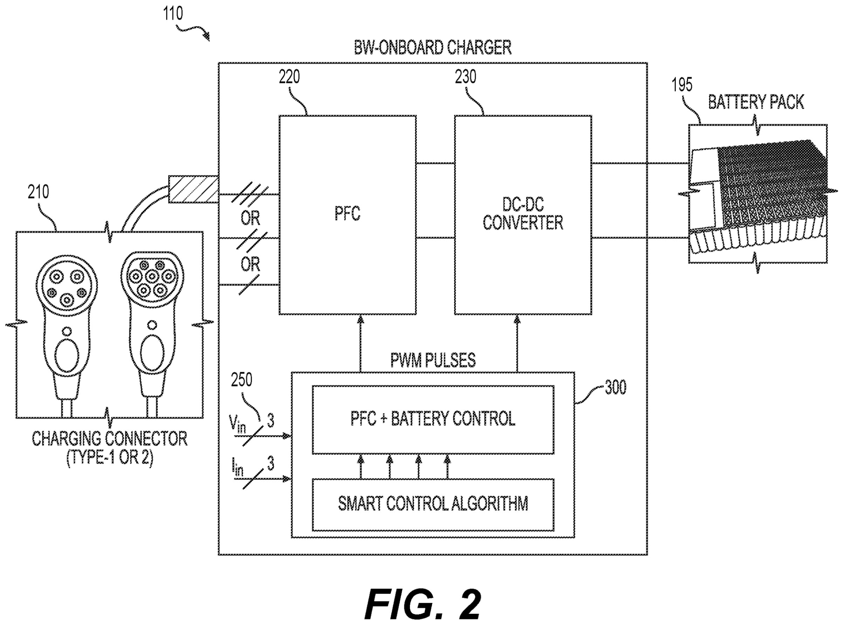

FIG. 2 depicts an exemplary system infrastructure for a battery charger, according to one or more embodiments. As depicted in FIG. 2, a battery charger 110 may include or be electrically connectable to a charging connector 210. The charging connector 210 may provide an electrical connection from an external power supply to the battery charger 110, and may be a Type 1 or a Type 2 connector, for example. The charging connector 210 may transfer single phase, two-phase, or three-phase power.

The battery charger 110 may include a PFC subsystem 220, a DC-DC converter 230, and a controller 300 receiving signals from input sensor 250. The battery charger 110 may include or be electrically connectable to a battery pack or load battery 195. The battery charger 110 may be used in automotive vehicles as an onboard charger to transfer power from an external power source through charging connector 210 to battery pack or load battery 195, or to transfer power from battery pack or load battery 195 in a vehicle to grid operation. The battery charger 110 may be included in a system provided as an electric vehicle 100 including a motor 190 configured to rotate based on power received from the battery pack or load battery 195.

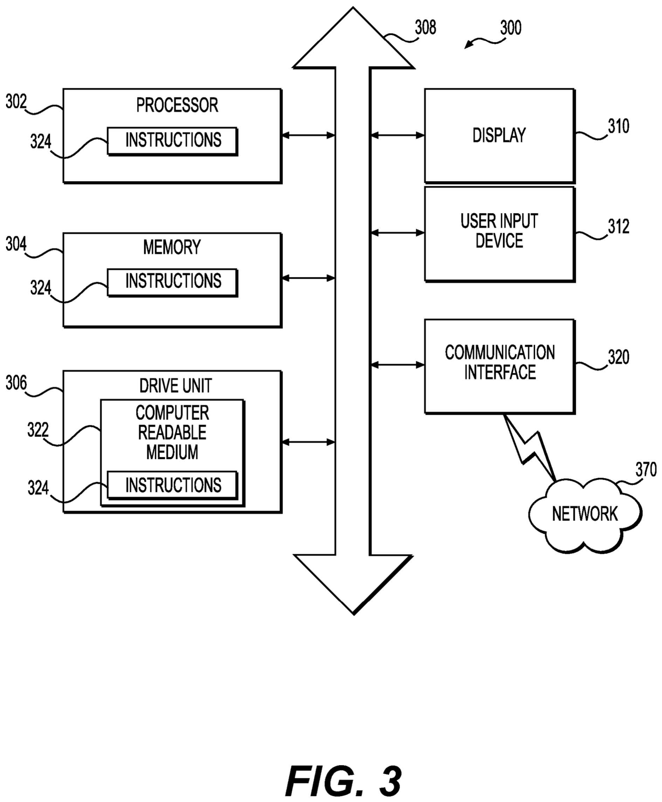

FIG. 3 depicts an implementation of a computer system that may execute techniques presented herein, according to one or more embodiments. Any suitable system infrastructure may be put into place to allow control of the battery charger. FIG. 3 and the following discussion provide a brief, general description of a suitable computing environment in which the present disclosure may be implemented. In one embodiment, any of the disclosed systems, methods, and/or graphical user interfaces may be executed by or implemented by a computing system consistent with or similar to that depicted in FIG. 3. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

The controller 300 may include a set of instructions that can be executed to cause the controller 300 to perform any one or more of the methods or computer-based functions disclosed herein. The controller 300 may operate as a standalone device or may be connected, e.g., using a network, to other computer systems or peripheral devices.

In a networked deployment, the controller 300 may operate in the capacity of a server or as a client in a server-client user network environment, or as a peer computer system in a peer-to-peer (or distributed) network environment. The controller 300 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the controller 300 can be implemented using electronic devices that provide voice, video, or data communication. Further, while the controller 300 is illustrated as a single system, the term "system" shall also be taken to include any collection of systems or sub-systems that individually or jointly execute a set, or multiple sets, of instructions to perform one or more computer functions.

As illustrated in FIG. 3, the controller 300 may include a processor 302, e.g., a central processing unit (CPU), a graphics processing unit (GPU), or both. The processor 302 may be a component in a variety of systems. For example, the processor 302 may be part of a standard computer. The processor 302 may be one or more general processors, digital signal processors, application specific integrated circuits, field programmable gate arrays, servers, networks, digital circuits, analog circuits, combinations thereof, or other now known or later developed devices for analyzing and processing data. The processor 302 may implement a software program, such as code generated manually (i.e., programmed).

The controller 300 may include a memory 304 that can communicate via a bus 308. The memory 304 may be a main memory, a static memory, or a dynamic memory. The memory 304 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the controller 300 may include an input device 312 configured to allow a user to interact with any of the components of controller 300. The input device 312 may be a number pad, a keyboard, or a cursor control device, such as a mouse, or a joystick, touch screen display, remote control, or any other device operative to interact with the controller 300.

The controller 300 may also or alternatively include drive unit 306 implemented as a disk or optical drive. The drive unit 306 may include a computer-readable medium 322 in which one or more sets of instructions 324, e.g. software, can be embedded. Further, the instructions 324 may embody one or more of the methods or logic as described herein. The instructions 324 may reside completely or partially within the memory 304 and/or within the processor 302 during execution by the controller 300. The memory 304 and the processor 302 also may include computer-readable media as discussed above.

In some systems, a computer-readable medium 322 includes instructions 324 or receives and executes instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in controller 300, or combinations thereof. The connection with the network 370 may be a physical connection, such as a wired Ethernet connection or may be established wirelessly as discussed below. Likewise, the additional connections with other components of the controller 300 may be physical connections or may be established wirelessly. The network 370 may alternatively be directly connected to a bus 308.

While the computer-readable medium 322 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory, and may be tangible.

The computer-readable medium 322 can include a solid-state memory such as a memory card or other package that houses one or more non-volatile read-only memories. The computer-readable medium 322 can be a random-access memory or other volatile re-writable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component/object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the steps of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

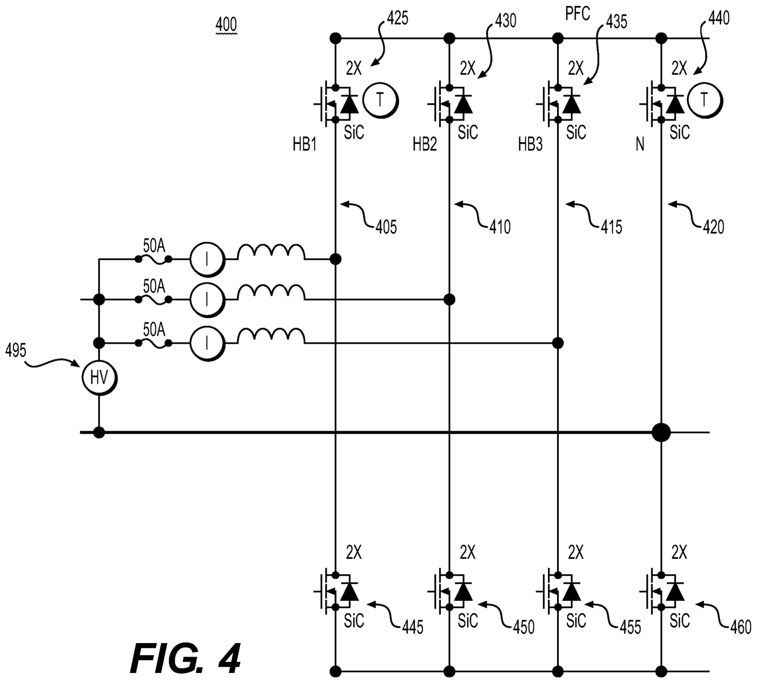

FIG. 4 depicts a power converter with a totem pole topology, according to one or more embodiments. As depicted, power factor correction circuit 400 may include first leaf 405, second leaf 410, third leaf 415, and neutral leaf 420, which may be half-bridges of a power converter with a totem pole topology. One or more embodiments may provide a power converter that is an AC-AC power converter. First leaf 405, second leaf 410, third leaf 415, and neutral leaf 420 may be electrically connected in parallel. First leaf 405 may include switch 425 and switch 445, which may be electrically connected in series. Second leaf 410 may include switch 430 and switch 450, which may be electrically connected in series. Third leaf 415 may include switch 435 and switch 455, which may be electrically connected in series. Neutral leaf 420 may include switch 440 and switch 460, which may be electrically connected in series. The half bridges of each leaf may be electrically connected in parallel.

A controller (e.g., controller 300) may be configured to operate switches in power factor correction circuit 400, including switch 425, switch 430, switch 435, switch 440, switch 445, switch 450, switch 455, and switch 460. Power factor correction circuit 400 may be electrically connected to high voltage source 495, which may operate at an AC input frequency. First leaf 405, second leaf 410, and third leaf 415 may be configured to operate at a first frequency. Neutral leaf 420 may be configured to operate at a second frequency. The second frequency may be different from the first frequency. The second frequency may be a percentage or factor of the first frequency. For example, the second frequency may be 50% of the first frequency. The second frequency may be independent from the AC input frequency of the high voltage source 495. Furthermore, because neutral leaf 420 may be configured to operate at the second frequency, neutral leaf 420 may operate independently from the AC input frequency of the high voltage source 495. One or more embodiments may provide a first frequency that is predetermined. One or more embodiments may provide a first frequency that is determined by one or more control loops.

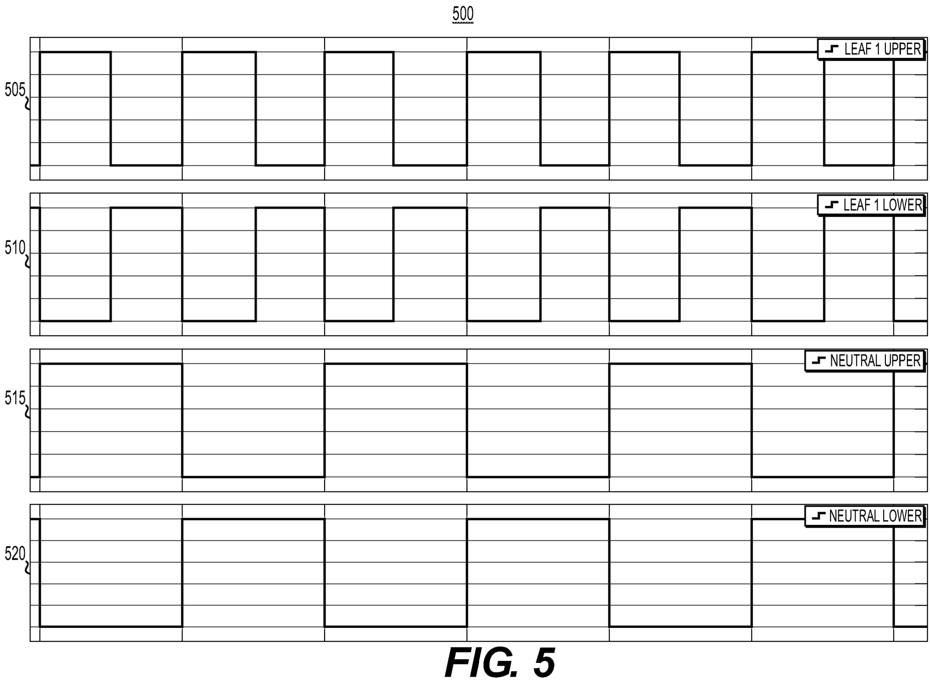

FIG. 5 depicts a switching pattern of a switch of a leaf of a power converter at approximately 50% duty cycle, according to one or more embodiments. Graph 500 may include a leaf upper signal 505 (e.g., switch 425), a leaf lower signal 510 (e.g., switch 445), a neutral upper signal 515 (e.g., switch 440), and a neutral lower signal 520 (e.g., switch 460). A controller (e.g., controller 300) may be configured to operate first leaf 405, second leaf 410, third leaf 415, and neutral leaf 420 based on a common clock signal. A controller (e.g., controller 300) may use pulse width modulation to modulate the clock signal for a given duty cycle, or the percentage of time the pulse is on within a period. For example, graph 500 may depict an embodiment of a switching pattern with a first leaf 405 at approximately 50% duty cycle, and a neutral leaf 420 at approximately 50% duty cycle.

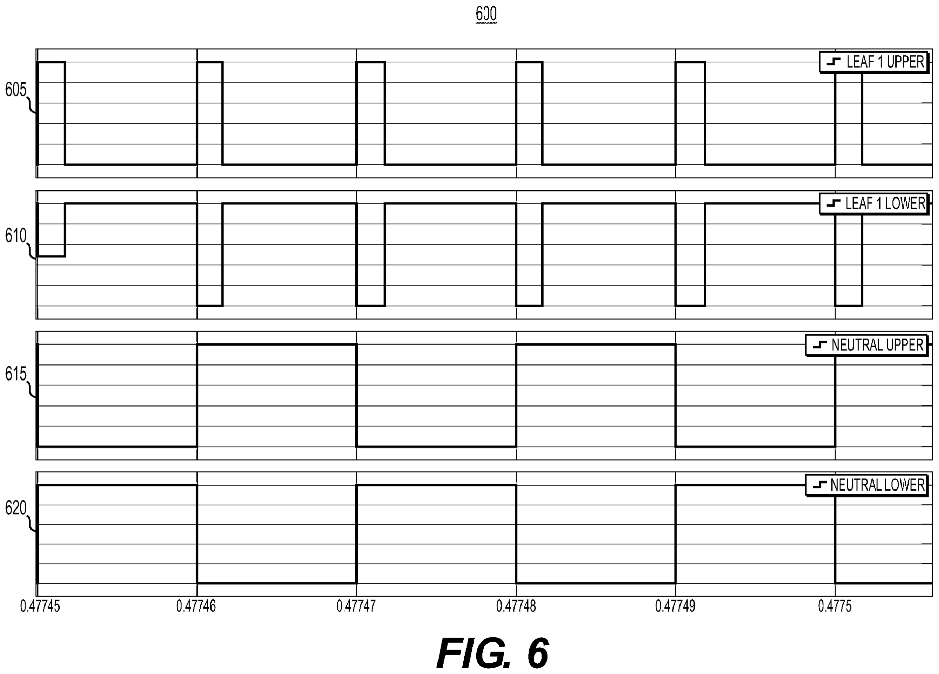

FIG. 6 depicts a switching pattern of a switch of a leaf of a power converter at approximately 17% duty cycle, according to one or more embodiments. Graph 600 may include a leaf upper signal 605 (e.g., switch 425), a leaf lower signal 610 (e.g., switch 445), a neutral upper signal 615 (e.g., switch 440), and a neutral lower signal 620 (e.g., switch 460). A controller (e.g., controller 300) may be configured to operate first leaf 405, second leaf 410, third leaf 415, and neutral leaf 420 based on a common clock signal. A controller (e.g., controller 300) may use pulse width modulation to modulate the clock signal for a given duty cycle. For example, graph 600 may depict an embodiment of a switching pattern with a first leaf 405 at approximately 17% duty cycle, and a neutral leaf 420 at approximately 50% duty cycle.

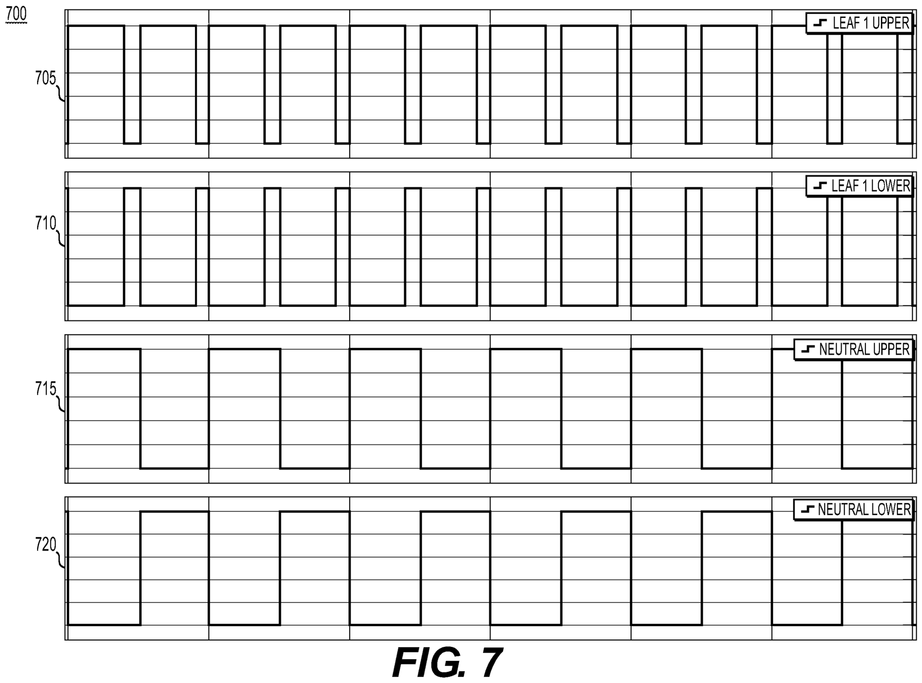

FIG. 7 depicts a switching pattern of a switch of a leaf of a power converter at approximately 75% duty cycle, according to one or more embodiments. Graph 700 may include a leaf upper signal 705 (e.g., switch 425), a leaf lower signal 710 (e.g., switch 445), a neutral upper signal 715 (e.g., switch 440), and a neutral lower signal 720 (e.g., switch 460). A controller (e.g., controller 300) may be configured to operate first leaf 405, second leaf 410, third leaf 415, and neutral leaf 420 based on a common clock signal. A controller (e.g., controller 300) may use pulse width modulation to modulate the clock signal such that the duty cycle, or the percentage of time the clock signal is active within a period, varies. For example, graph 700 may depict an embodiment of a switching pattern with a first leaf 405 at approximately 75% duty cycle, and a neutral leaf 420 at approximately 50% duty cycle.

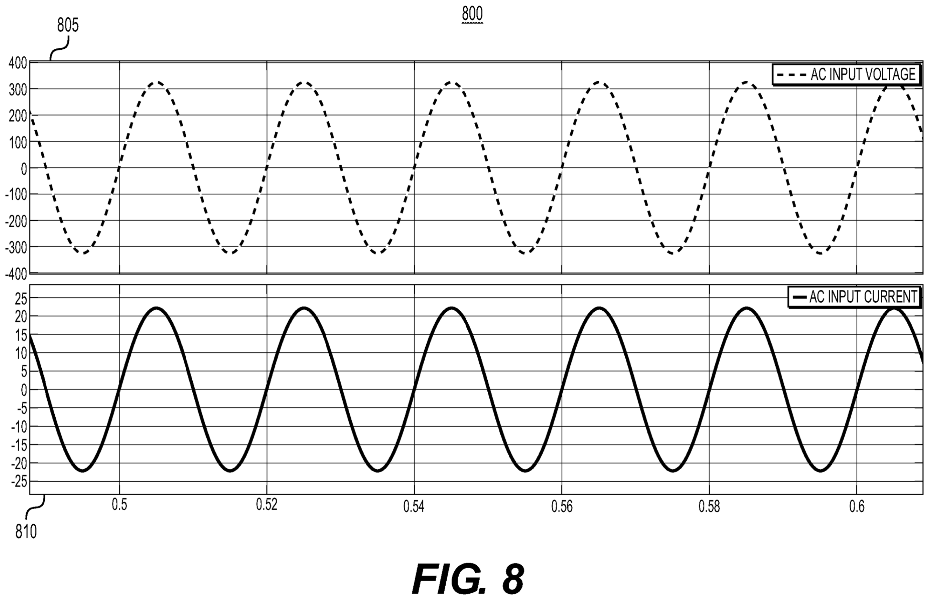

FIG. 8 depicts input voltage and input current for a converter operation, according to one or more embodiments. Graph 800 may include AC input voltage 805 and an AC input current 810. AC input voltage 805 and AC input current 810 may depict a totem pole operation as a power factor correction converter in an onboard charger system. As depicted in FIG. 8, an AC input voltage 805 to DC-DC converter 230 may have a period of approximately 20 ms, for example, which corresponds to approximately 50 Hz. The approximately 50 Hz of AC input voltage 805 may be compared to the approximately 50 kHz frequency of neutral upper signal 615, as depicted in FIG. 6, for example. One or more embodiments may include alternate AC input voltages, including 60 Hz.

One or more embodiments provides include a switching pattern that does not require or utilize zero crossing detection and processing. One or more embodiments may provide efficiency improvement, including conduction all the time, for example during a zero crossing. One or more embodiments may provide a converter switching continuing even at zero crossing, which may provide higher efficiency, due to independence from the AC half cycle. One or more embodiments may provide the ability to perform simultaneous operation in bi-directional OBCs (for example, bi-directional on-board chargers). One or more embodiments may provide a switching pattern which provides OBC HV (high voltage) battery charging and AC output voltage generation at the same time or near-same time. One or more embodiments may provide a switching pattern providing generation of split phase and three phase AC output voltage while an OBC is charging an HV battery using a single phase input. One or more embodiments may provide a switching pattern which provides independence from an AC line frequency.

One or more embodiments may provide an ability to perform AC to AC conversion, and may provide a switching pattern which may allow AC input to AC output conversion without the need for transformer. One or more embodiments may provide a switching pattern which provides conversion of one AC phase type to another. One or more embodiments may provide a switching pattern which provides generation of different AC output frequencies independent of the AC input frequency.

One or more embodiments may provide one or more controllers which may operate independent of an AC half cycle which may lead to better reaction when compared to deadband around zero crossing. One or more embodiments may provide neutral switching which can be performed as one-time configuration instead of software control. One or more embodiments may provide independence from determining the AC half cycle. An AC half cycle determination may utilize software and hardware effort to detect a zero crossing and adjust a switching pattern based on ab AC half cycle determination.

One or more embodiments may provide a switching pattern doesn't require zero crossing detection and processing, including an ability to perform simultaneous operation in bi-directional OBCs. One or more embodiments may provide a switching pattern to allow OBC HV battery charging and AC output voltage generation at the same time. One or more embodiments may provide a switching pattern to allow generation of split phase and three phase AC output voltage while the OBC is charging the HV battery using a single phase input. One or more embodiments may provide a switching pattern which may provide independence from the AC line frequency.

One or more embodiments may provide an ability to perform AC to AC conversion. One or more embodiments may provide a switching pattern which may allow AC input to AC output conversion without the need for transformer. One or more embodiments may provide a switching pattern which may allow conversion of one AC phase type to another. One or more embodiments may provide a switching pattern which may allow the ability to generate different AC output frequencies independent of the AC input frequency. One or more embodiments may provide efficiency improvement, including a converter that may not have to change the switching pattern based on AC half cycle, and where the converter switching may continue even at zero crossing and may avoid diode conduction, which may provide higher efficiency.

Other embodiments of the disclosure will be apparent to those skilled in the art from consideration of the specification and practice of the invention disclosed herein. It is intended that the specification and examples be considered as exemplary only, with a true scope of the invention being indicated by the following claims.

## Claims

1. A power converter comprising:
a first half-bridge configured to operate at a first frequency;
a second half-bridge in parallel with the first half-bridge and configured to operate at the first frequency;
a third half-bridge in parallel with the second half-bridge and configured to operate at the first frequency; and
a neutral half-bridge of the power converter in parallel with the third half-bridge and configured to operate at a second frequency, wherein the second frequency is based on the first frequency.

2. The power converter of claim 1, wherein each of the first half-bridge, the second half-bridge, the third half-bridge, and the neutral half-bridge includes a first switch and a second switch.

3. The power converter of any one of claims 1 to 2, wherein the second frequency is 50% of the first frequency.

4. The power converter of any one of claims 1 to 3, wherein the power converter is an AC-AC converter.

5. The power converter of any one of claims 1 to 4, wherein a duty cycle of the neutral half-bridge is 50%, and the duty cycle of the neutral half-bridge is independent from a duty cycle of the first half-bridge, the second half-bridge, and the third half-bridge.

6. The power converter of any one of claims 1 to 5, further comprising one or more controllers configured to operate the first half-bridge, the second half-bridge, the third half-bridge, and the neutral half-bridge; and/or
wherein one or more controllers are configured to generate the second frequency and the first frequency using a same clock signal.

7. The power converter of any one of claims 1 to 6, wherein the power converter is configured to generate 50 Hz AC output power based on a 60 Hz AC input power; and/or
wherein the second frequency is independent from a frequency of AC input power to the power converter.

8. The power converter of any one of claims 1 to 7, further comprising:
an inverter including the power converter, the inverter configured to convert DC power from a battery to AC power to drive a motor,
the battery configured to supply the DC power to the inverter; and
the motor configured to receive the AC power from the inverter to drive the motor,
wherein the inverter, the battery, and the motor are provided as a vehicle.

9. A system including one or more controllers configured to operate a first half-bridge of a power converter at a first frequency, a second half-bridge of the power converter at the first frequency, a third half-bridge of the power converter at the first frequency, and a neutral half-bridge of the power converter at a second frequency,
wherein the second frequency is based on the first frequency.

10. The system of claim 9, wherein the first half-bridge is in parallel with the second half-bridge, the second half-bridge is in parallel with the third half-bridge, and the third half-bridge is in parallel with the neutral half-bridge.

11. The system of any one of claims 9 to 10, wherein the second frequency is 50% of the first frequency; and/or
wherein the one or more controllers are configured to generate the second frequency independently from a frequency of AC input power to the power converter.

12. A method comprising:
operating switches of a first half-bridge of a power converter at a first frequency;
operating switches of a second half-bridge of the power converter at the first frequency;
operating switches of a third half-bridge of the power converter at the first frequency; and
operating switches of a neutral half-bridge of the power converter at a second frequency, wherein the second frequency is based on the first frequency.

13. The method of claim 12, wherein the second frequency is 50% of the first frequency; and/or
wherein a duty cycle of the neutral half-bridge is independent from a duty cycle of the first half-bridge, the second half-bridge, and the third half-bridge.

14. The method of any one of claims 12 to 13, further comprising:
generating the second frequency and the first frequency based on a common clock signal; and/or
operating one or more of the first half-bridge, the second half-bridge, the third half-bridge, or the neutral half-bridge during a zero crossing of an AC input signal to the power converter.

15. The method of any one of claims 12 to 14, wherein the operating the switches of the neutral half-bridge of the power converter at the second frequency includes converting a single phase AC input signal to the power converter to a split phase AC output signal or a three-phase AC output signal.
